# EUROPEAN PATENT SPECIFICATION

(11) **EP 4 621 506 B1**
(45) Date of publication and mention of the grant of the patent: **10.06.2026**
(21) Application number: 25162346.8
(22) Date of filing: 07.03.2025
(51) Int. Cl.: G05B 19/05

(54) **SYSTEMS, APPARATUSES, METHODS, AND COMPUTER PROGRAM PRODUCTS FOR EMISSIONS IMPACT MITIGATION**
SYSTEME, VORRICHTUNGEN, VERFAHREN UND COMPUTERPROGRAMMPRODUKTE ZUR EMISSIONSAUSWIRKUNGSMINDERUNG
SYSTÈMES, APPAREILS, PROCÉDÉS ET PRODUITS-PROGRAMMES INFORMATIQUES POUR ATTÉNUER L'IMPACT SUR LES ÉMISSIONS

(30) Priority: 21.03.2024 US 202418612549
(43) Date of publication of application: 24.09.2025
(73) Proprietor: HONEYWELL INTERNATIONAL INC., Charlotte, NC 28202 (US)
(72) Inventor: RAJENDRAN, Ramkumar, Charlotte, 28202 (US); KHAN, Kalimulla, Charlotte, 28202 (US); J, Kirupakar, Charlotte, 28202 (US); KURUDI, Srilakshmi, Charlotte, 28202 (US); GABA, Sai Keshav, Charlotte, 28202 (US)
(74) Representative: Haseltine Lake Kempner LLP

(56) References cited:
- EP-A1- 3 926 423
- WO-A1-2024/039906
- US-A1- 2020 201 357
- US-A1- 2022 147 897
- SCHR�DER MARC ET AL: "Eco-friendly 3D-Routing: A GIS based 3D-Routing-Model to estimate and reduce CO2-emissions of distribution transports", COMPUTERS ENVIRONMENT AND URBAN SYSTEMS, NEW YORK, NY, US, vol. 73, 16 August 2018 (2018-08-16), pages 40 - 55, XP085521873, ISSN: 0198-9715, DOI: 10.1016/J.COMPENVURBSYS.2018.08.002
- ZENG WEILIANG ET AL: "Prediction of vehicle CO2emission and its application to eco-routing navigation", TRANSPORTATION RESEARCH PART C:EMERGING TECHNOLOGIES, PERGAMON, NEW YORK, NY, GB, vol. 68, 11 April 2016 (2016-04-11), pages 194 - 214, XP029596795, ISSN: 0968-090X, DOI: 10.1016/J.TRC.2016.04.007

## Description

### TECHNOLOGICAL FIELD

The present disclosure relates, generally, to systems, apparatuses, methods, and computer program products for emissions impact mitigation. Example embodiments are directed to systems, apparatuses, methods, and computer program products for generating vehicle operating plans that include emissions impact-optimized paths.

### BACKGROUND

Various embodiments of the present disclosure address technical challenges related to mitigating emissions impact. Through applied effort, ingenuity, and innovation, Applicant has solved problems related to mitigating emissions impact by developing solutions embodied in the present disclosure, which are described in detail below. Reference may be made to US 2020/201357 A1 which relates to systems and methods for vehicle scheduling and routing, and US 2022/147897 A1 which relates to machine learning for predictive optimization.

### BRIEF SUMMARY

The present invention is defined by the appended claims. In general, embodiments of the present disclosure provide methods, apparatus, systems, computing devices, computing entities, and/or the like for predicting emissions impact-optimized paths for a target vehicle operation and/or generating vehicle operating plans that include predicted emissions impact-optimized paths. Other implementations for predicting emissions impact-optimized paths for a target vehicle operation and/or generating vehicle operating plans that include predicted emissions impact-optimized paths will be, or will become, apparent to one with skill in the art upon examination of the following figures and detailed description. It is intended that all such additional implementations be included within this description be within the scope of the disclosure and be protected by the following claims.

In accordance with an aspect of the disclosure a computing system is provided. In an example embodiment, the computing system comprises memory and one or more processors communicatively coupled to the memory, the one or more processors configured to identify input data set for a target vehicle operation; determine, using a machine learning optimization model, an emissions impact-optimized path based on the input data set and historical emissions impact data associated with a plurality of historical vehicle operations; evaluate the emissions impact-optimized path, based on one or more validation engines, to generate an evaluation output; and determine a validated emissions impact-optimized path for the target vehicle operation based on the emissions impact-optimized path and the evaluation output.

In accordance with another aspect of the disclosure, a computer-implemented method is provided. In one example embodiment the computer-implemented method comprises identifying, by one or more processors, input data set for a target vehicle operation; determining, by the one or more processors using a machine learning optimization model, an emissions impact-optimized path based on the input data set and historical emissions impact data associated with a plurality of historical vehicle operations; evaluating, by the one or more processors, the emissions impact-optimized path based on one or more validation engines to generate an evaluation output; and determining, by the one or more processors, a validated emissions impact-optimized path for the target vehicle operation based on the emissions impact-optimized path and the evaluation output.

In accordance with another aspect of the disclosure, a computer-implemented method is provided. In one example embodiment, the computer-implemented method comprising identifying, by one or more processors, input data set for a target vehicle operation, the input data set; generating, by the one or more processors and using a machine learning optimization model, predicted emissions impact data for each candidate vehicle path of one or more candidate vehicle paths based on the input data set and historical emissions impact data; and selecting, by the one or more processors and using the machine learning optimization model, an emissions impact-optimized path from the one or more candidate vehicle paths based on the predicted emissions impact data for each candidate vehicle path.

It should be appreciated that any and/or all aspects and/or operations of the example computer-implemented methods described herein may be combinable with any other of the aspects and/or operations of any other of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of an example system environment within which at some embodiments of the present disclosure may operate;
FIG. 2 illustrates a block diagram of an example computing entity that may be specially configured in accordance with at least some embodiments of the present disclosure;
FIG. 3 illustrates an example client computing entity in accordance with some embodiments of the present disclosure;
FIG. 4 illustrates a data flow diagram showing example data structures for emissions impact mitigation in accordance with at least some embodiments of the present disclosure;
FIG. 5 illustrates an example implementation of an emissions impact mitigation system in accordance with at least some embodiments of the present disclosure.
FIG. 6 is a flowchart diagram of an example process for generating emissions-impact optimized path.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### Overview and Technical Improvements

Example embodiments disclosed herein address technical challenges associated with systems, apparatuses, method, and computer program products for mitigating emissions impact, such as greenhouse (GH) gas (e.g., carbon dioxide (CO2), methane (CH4), nitrous oxide (N2O), and/or the like) emission impact associated with operational systems such as, but not limited to, aviation systems. In many applications, systems, apparatuses, methods, and computer program products, emission impact mitigation is desired and/or necessary. For example, climate change is a major global issue and a challenge that needs to be addressed. The aviation industry, for example, has a significant impact on greenhouse gas emissions and, therefore, a contributor to climate change. When aircraft burn fossil fuels like jet fuel, they produce greenhouse gases as a byproduct which may contribute to climate change. On the other hand, the aviation is an important mode of transportation and plays an important role in the global economy. The aviation industry recognizes its impact on the environment and many entities in the industry desire to implement measures to reduce greenhouse gas emissions. For example, CORSIA (carbon offsetting and reduction scheme for international aviation) has a set a goal to reduce the current level of emissions by 50% by the year 2050.

Seasonal variations in temperature and vegetation can affect the rate of natural processes that produce and consume greenhouse gases. For instance, in warmer months, biological activity, such as plant growth and microbial activity, tends to increase, leading to more CO2 being absorbed through photosynthesis. Conversely, during colder months, these processes slow down, potentially resulting in a net increase in CO2 concentrations in the atmosphere. For example, net CO2 density varies per season and generally may be higher during a particular month of the year as compared to another month of the year. The inventors have observed that greenhouse gas emissions in greenhouse high-density zones would multifold the greenhouse gas emissions impact in such high-density zones and outweigh the impact in less dense areas. For example, adding more flights to greenhouse high density zones would multifold the greenhouse gas emission impact in such high-density zones and outweigh the impact in less-density zones.

Various technical improvements will be appreciated from the present disclosure. Various embodiments in the present disclosure address the above-mentioned challenges and difficulties, as well as other challenges and difficulties associated with mitigating emissions impact. Various embodiments of the present disclosure address technical challenges related to generating planned improvements in various domains, for example plan recommendations that are determined to improve one or more target metric(s) (e.g., emissions impact, emissions quantity and/or the like) of a particular domain, particularly in high-dimensionality prediction domains, where the presence of a large number of variables, factors, parameters, key performance indicators (KPI), and/or the like and the complex relationships between those variables, factors, parameters, key performance indicators (KPI), and/or the like complicates effective and computationally efficient predictive data analysis to generate optimized plans that achieves the one or more target metrics without negatively affecting other targets/KPI.

Example embodiments in the present disclosure assess historical vehicle operations and stores historical emissions impact data based on historical operational data for the historical vehicle operations and/or emissions data (e.g., greenhouse gas density data) associated with the historical vehicle operations. By way of example, in an example aviation domain or application, example embodiments may assess and record the impact of CO2 emissions based on historical flight data and greenhouse gas density along the flight path.

Example embodiments in the present disclosure determine using a machine learning optimization model, an emissions impact-optimized path based on data including, but not limited to environmental data, historical emissions impact data and/or the like.

Example embodiments in the present disclosure evaluate the emissions impact-optimized path based on one or more validation engines and/or one or more efficiency engine to generate an evaluation output. Example embodiments in the present disclosure determine a validated emissions impact-optimized path for the target vehicle operation based on the emissions impact-optimized path and the evaluation output. Example embodiments in the present disclosure determine the validated emissions impact-optimized path for a vehicle operation in real time and before commencement of the vehicle operation. In aviation domain, for example, example embodiments may determine the validated emissions-impact-optimized path in real-time and preflight.

Various embodiments in the disclosure considers greenhouse gas impact and seasons to generate an optimal vehicle operation plan that includes an emissions impact-optimized path. In this regard, various embodiments of the present disclosure provide for generating a vehicle operation plan that minimizes the impact of the greenhouse gas emissions associated with the vehicle operation. Embodiments of the present disclosure provide for generating optimized vehicle operation plans utilizing a model-based approach (e.g., artificial Intelligence/machine learning-based approach configured to generate an emissions impact-optimized path for a target vehicle operation while also taking into account several other KPI's (e.g., safety, efficiency, and/or the like). In this manner, embodiments of the present disclosure provide for generating an optimized vehicle operation plan that reflects or otherwise includes validated emissions impact-optimized paths.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

### EXAMPLE SYSTEMS AND APPARATUSES OF THE DISCLOSURE

Embodiments of the present disclosure may be implemented in various ways, including as computer program products that comprise articles of manufacture, as hardware, including circuitry, configured to perform one or more functions, and/or as combinations of specific hardware and computer program products. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as one or more methods, apparatuses, systems, computing devices (e.g., user devices, servers, etc.), computing entities, and/or the like. As such, embodiments of the present disclosure may take the form of an apparatus, system, computing device, computing entity, and/or the like executing instructions stored on one or more computer-readable storage mediums to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. In embodiments in which specific hardware is described, it is understood that such specific hardware may work in conjunction with the foregoing according to the various examples described herein. Accordingly, the block diagrams and flowchart illustrations support various combinations of embodiments for performing the specified instructions, operations, or steps.

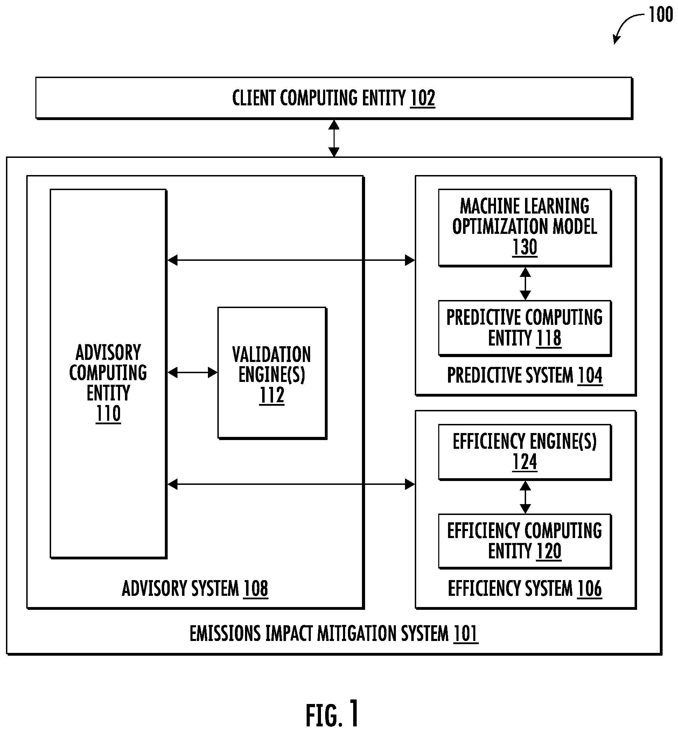

In this regard, FIG. 1 shows an example system environment 100 within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1 and the system environment 100 disclosed therein is merely presented to provide an example basis and context for the facilitation of some of the features, aspects, and uses of the methods, apparatuses, computer readable media, and computer program products disclosed and contemplated herein. It will be understood that while many of the aspects and components presented in FIG.1 are shown as discrete, separate elements, other configurations may be used in connection with the methods, apparatuses, computer readable media, and computer programs described herein, including configurations that combine, omit, separate, and/or add aspects and/or components.

As shown in FIG. 1, the example system environment 100 includes an emissions impact mitigation system 101 configured to receive requests, such as vehicle path requests, from client computing entities 102, process the requests to generate emissions-impact optimized path outputs, and provide the generated emissions-impact optimized path outputs to the client computing entities 102. The example system environment 100 may be used in a plurality of domains and not limited to any specific application as disclosed herewith. The plurality of domains may include aviation, industrial, manufacturing, banking, education, retail, to name a few. In some embodiments, the emissions impact mitigations system 101 may be embodied or otherwise implemented as a cloud-based system.

In some embodiments, the emissions impact mitigation system 101 may communicate with at least one of the client computing entities 102 using one or more communication networks. Examples of communication networks include any wired or wireless communication network including, for example, a wired or wireless local area network (LAN), personal area network (PAN), metropolitan area network (MAN), wide area network (WAN), or the like, as well as any hardware, software, and/or firmware required to implement it (such as, e.g., network routers, and/or the like).

The emissions impact mitigation system 101 may include a predictive system 104, an efficiency system 106, and/or an advisory system 108. The predictive system 104, efficiency system 106, and/or advisory system 108 may be individually and/or collectively configured to receive requests from client computing entities 102, process the requests to generate outputs, such as emissions impact-optimized paths.

For example, the predictive system 104, efficiency system 106, and/or advisory system 108 may comprise storage subsystems that may be configured to store input data, training data, output data, and/or the like that may be used by the respective systems to perform predictive data analysis, training operations, and/or other operations of the present disclosure. In addition, the storage subsystems may be configured to store model definition data used by the respective systems to perform various predictive data analysis and/or training tasks. The storage subsystem may include one or more storage units, such as multiple distributed storage units that are connected through a computer network. Each storage unit in the respective storage system may store at least one of one or more data assets and/or one or more data about the computed properties of one or more data assets. Moreover, each storage unit in the storage systems may include one or more non-volatile storage or memory media including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

In some embodiments, the predictive system 104, efficiency system 106, and/or advisory system 108 are communicatively coupled using one or more wired and/or wireless communication techniques. The respective systems may be specially configured to perform one or more steps/operations of one or more techniques described herein. By way of example, the predictive system 104 (e.g., predictive computing entity 118 thereof) may be configured to train, implement, use, update, and/or evaluate one or more machine learning models in accordance with one or more training and/or inference operations of the present disclosure.

In some example embodiments, the predictive system 104 may be configured to receive and/or transmit one or more datasets, objects, and/or the like from and/or to one or more client computing entities 102 to facilitate or perform one or more steps/operations of one or more techniques (e.g., emissions impact mitigation techniques, machine learning model training techniques, emissions impact-optimized path prediction techniques, evaluation techniques, validation techniques and/or the like) described herein. The predictive system 104, for example, may include and/or be associated with a predictive computing entity 118 that may be configured to receive, transmit, store, manage, and/or facilitate datasets, such as environmental data, predicted emissions data, historical emissions impact data and/or the like. One or more client computing entities 102, for example, may include or be associated with data sources that may provide such datasets to the predictive system 104, which may leverage the datasets to perform one or more steps/operations of the present disclosure such as, but not limited to, predicting emissions impact-optimized paths.

In some examples, the datasets may include an aggregation of data from across a plurality of data sources, third-party computing entities, and/or the like into one or more aggregated datasets. The third-party computing entities, for example, may be associated with one or more data repositories, cloud platforms, compute nodes, organizations, and/or the like, which may be individually and/or collectively leveraged by the predictive computing entity 118 to obtain and aggregate data for a prediction domain.

In some example embodiments, the advisory system 108 may be configured to receive and/or transmit one or more datasets, objects, and/or the like from and/or to the predictive system 104 and/or the efficiency system 106 to facilitate or perform one or more steps/operations of one or more techniques described herein. The advisory system 108, for example, may include and/or be associated with an advisory computing entity 110 that may be configured to receive, transmit, store, manage, and/or facilitate datasets, such as emissions impact-optimized path, efficiency data, and/or the like. The advisory system 108 (via the advisory computing entity 110), for example, may be configured to receive such datasets from the predictive system 104 and/or the efficiency system 106. For example, the predictive computing entity 118 may be configured to provide predicted emissions impact-optimized path outputs of the predictive system 104 to the advisory computing entity 110. For example, the efficiency system 106 may include or be associated with an efficiency computing entity 120 that may be configured to provide efficiency data to the advisory computing entity 110. The advisory computing entity 110 may be configured to leverage the datasets (e.g., predicted emissions impact-optimized path, efficiency data, and/or the like) to perform one or more steps/operations of the present disclosure such as, but not limited to, determining an emissions impact-optimized path and/or generating a vehicle operation plan that reflects an emissions-impact optimized path.

In some example embodiments, the advisory system 108 may include or be associated with one or more validation engines 112. The advisory computing entity 110 may be configured to receive and/or transmit one or more datasets, objects, and/or the like from and/or to the one or more validation engines 112 to facilitate or perform one or more steps/operations of one or more techniques described herein. For example, the advisory system 108 may leverage the one or more validation engines 112 to evaluate and/or validate optimized emissions impact-optimized path outputs of the predictive system 104.

In some example embodiments, the predictive system 104 may be configured to generate and/or train a machine learning model, such as machine learning optimization model 130. For example, the predictive system 104 (e.g., the predictive computing entity 118 thereof) may be configured to perform one or more training steps/operations of the present disclosure to train a machine learning model, as described herein. The predictive computing entity 118 may leverage the trained machine learning model to perform one or more inference steps/operations of the present disclosure.

In some example, embodiments, the machine learning model (e.g., machine learning optimization model 130) may be received from a third-party computing entity. For example, the predictive system 104 may be configured to receive a trained machine learning model trained and subsequently provided by a third-party computing entity. For example, the third-party computing entity may be configured to perform one or more training steps/operations of the present disclosure to train a machine learning model, as described herein. In such a case, the trained machine learning model may be provided to the predictive computing entity 118, which may leverage the trained machine learning model to perform one or more inference steps/operations of the present disclosure.

In some examples, feedback (e.g., evaluation data, ground truth data, etc.) from the use of the machine learning model may be recorded by the advisory computing entity 110 and/or the predictive computing entity 118. In some examples, the feedback may be leveraged by the predictive computing entity 118 or third-party computing entity to continuously train the machine learning model over time. In this manner, the emissions impact mitigation system 101 may perform, via one or more combinations of computing entities, one or more prediction, training, and/or any other machine learning-based techniques of the present disclosure.

### A. Example Predictive Computing Entity

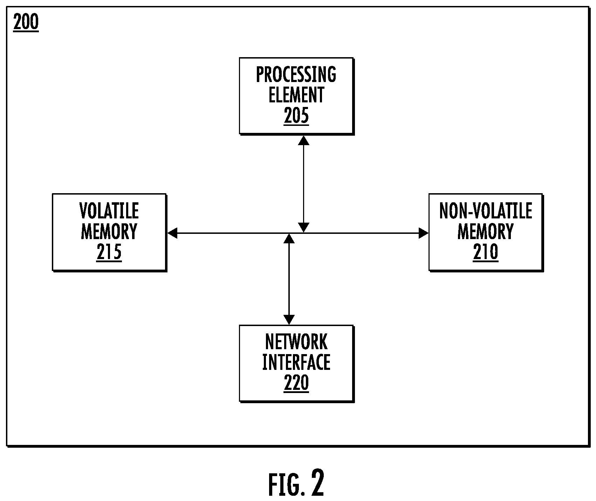

FIG. 2 provides an example computing entity 200 in accordance with some embodiments of the present disclosure. The computing entity 200 is an example of the predictive computing entity 118, the efficiency computing entity 120, the advisory computing entity 110, the one or more engines 112, and/or third-party computing entity as described with reference to FIG. 1. In general, the terms computing entity, computer, entity, device, system, and/or similar words used herein interchangeably may refer to, for example, one or more computers, computing entities, desktops, mobile phones, tablets, phablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, training one or more machine learning models, monitoring, evaluating, comparing, and/or similar terms used herein interchangeably. In some embodiments, these functions, operations, and/or processes may be performed on data, content, information, and/or similar terms used herein interchangeably. In some embodiments, one computing entity (e.g., predictive computing entity 118, etc.) may train and use one or more machine learning models described herein. In other embodiments, a first computing entity (e.g., predictive computing entity 118, etc.) may use one or more machine learning models that may be trained by a second computing entity (e.g., an external computing entity) which may be communicatively coupled to the first computing entity. The second computing entity, for example, may train one or more of the machine learning models described herein, and subsequently provide the trained machine learning model(s) (e.g., optimized weights, code sets, etc.) to the first computing entity over a network.

As shown in FIG. 2, in some embodiments, the computing entity 200 may include, or be in communication with, one or more processing elements 205 (also referred to as processors, processing circuitry, and/or similar terms used herein interchangeably) that communicate with other elements within the computing entity 200 via a bus, for example. As will be understood, the processing element 205 may be embodied in a number of different ways.

For example, the processing element 205 may be embodied as one or more complex programmable logic devices (CPLDs), microprocessors, multi-core processors, coprocessing entities, application-specific instruction-set processors (ASIPs), microcontrollers, and/or controllers. Further, the processing element 205 may be embodied as one or more other processing devices or circuitry. The term circuitry may refer to an entirely hardware embodiment or a combination of hardware and computer program products. Thus, the processing element 205 may be embodied as integrated circuits, application specific integrated circuits (ASICs), field programmable gate arrays (FPGAs), programmable logic arrays (PLAs), hardware accelerators, other circuitry, and/or the like.

As will therefore be understood, the processing element 205 may be configured for a particular use or configured to execute instructions stored in volatile or non-volatile media or otherwise accessible to the processing element 205. As such, whether configured by hardware or computer program products, or by a combination thereof, the processing element 205 may be capable of performing steps or operations according to embodiments of the present disclosure when configured accordingly.

In some embodiments, the computing entity 200 may further include, or be in communication with, non-volatile media (also referred to as non-volatile storage, memory, memory storage, memory circuitry, and/or similar terms used herein interchangeably). In some embodiments, the non-volatile media may include one or more non-volatile memory 210, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

As will be recognized, the non-volatile media may store databases, database instances, database management systems, data, applications, programs, program modules, scripts, code (e.g., source code, object code, byte code, compiled code, interpreted code, machine code, etc.) that embodies one or more machine learning models or other computer functions described herein, executable instructions, and/or the like. The term database, database instance, database management system, and/or similar terms used herein interchangeably, may refer to a collection of records or data that is stored in a computer-readable storage medium using one or more database models; such as a hierarchical database model, network model, relational model, entity-relationship model, object model, document model, semantic model, graph model, and/or the like.

In some embodiments, the computing entity 200 may further include, or be in communication with, volatile media (also referred to as volatile storage, memory, memory storage, memory circuitry, and/or similar terms used herein interchangeably). In some embodiments, the volatile media may also include one or more volatile memory 215, including, but not limited to, RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like.

As will be recognized, the volatile storage or memory media may be used to store at least portions of the databases, database instances, database management systems, data, applications, programs, program modules, code (source code, object code, byte code, compiled code, interpreted code, machine code) that embodies one or more machine learning models or other computer functions described herein, executable instructions, and/or the like being executed by, for example, the processing element 205. Thus, the databases, database instances, database management systems, data, applications, programs, program modules, code (source code, object code, byte code, compiled code, interpreted code, machine code) that embodies one or more machine learning models or other computer functions described herein, executable instructions, and/or the like may be used to control certain aspects of the operation of the computing entity 200 with the assistance of the processing element 205 and operating system.

As indicated, in some embodiments, the computing entity 200 may also include one or more network interfaces 220 for communicating with various computing entities (e.g., the client computing entity 102, external computing entities, etc.), such as by communicating data, code, content, information, and/or similar terms used herein interchangeably that may be transmitted, received, operated on, processed, displayed, stored, and/or the like. Such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. In some embodiments, the computing entity 200 communicates with another computing entity for uploading or downloading data or code (e.g., data or code that embodies or is otherwise associated with one or more machine learning models). Similarly, the computing entity 200 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

Although not shown, the computing entity 200 may include, or be in communication with, one or more input elements, such as a keyboard input, a mouse input, a touch screen/display input, motion input, movement input, audio input, pointing device input, joystick input, keypad input, and/or the like. The computing entity 200 may also include, or be in communication with, one or more output elements (not shown), such as audio output, video output, screen/display output, motion output, movement output, and/or the like.

### B. Example Client Computing Entity

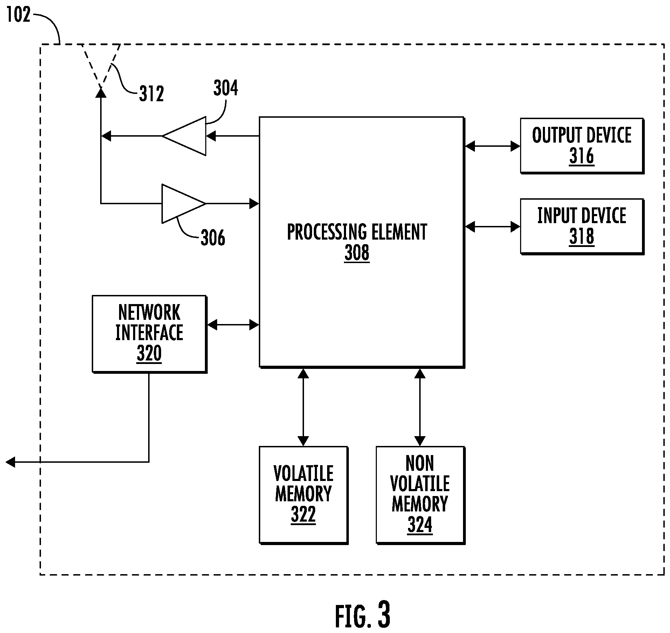

FIG. 3 provides an example client computing entity in accordance with some embodiments of the present disclosure. In general, the terms device, system, computing entity, entity, and/or similar words used herein interchangeably may refer to, for example, one or more computers, computing entities, desktops, mobile phones, tablets, phablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Client computing entities 102 may be operated by various parties. As shown in FIG. 3, the client computing entity 102 may include an antenna 312, a transmitter 304 (e.g., radio), a receiver 306 (e.g., radio), and a processing element 308 (e.g., CPLDs, microprocessors, multi-core processors, coprocessing entities, ASIPs, microcontrollers, and/or controllers) that provides signals to and receives signals from the transmitter 304 and receiver 306, correspondingly.

The signals provided to and received from the transmitter 304 and the receiver 306, correspondingly, may include signaling information/data in accordance with air interface standards of applicable wireless systems. In this regard, the client computing entity 102 may be capable of operating with one or more air interface standards, communication protocols, modulation types, and access types. More particularly, the client computing entity 102 may operate in accordance with any of a number of wireless communication standards and protocols, such as those described above with regard to the computing entity 200. In some embodiments, the client computing entity 102 may operate in accordance with multiple wireless communication standards and protocols, such as UMTS, CDMA2000, 1xRTT, WCDMA, GSM, EDGE, TD-SCDMA, LTE, E-UTRAN, EVDO, HSPA, HSDPA, Wi-Fi, Wi-Fi Direct, WiMAX, UWB, IR, NFC, Bluetooth, USB, and/or the like. Similarly, the client computing entity 102 may operate in accordance with multiple wired communication standards and protocols, such as those described above with regard to the computing entity 200 via a network interface 320.

Via these communication standards and protocols, the client computing entity 102 may communicate with various other entities using mechanisms such as Unstructured Supplementary Service Data (USSD), Short Message Service (SMS), Multimedia Messaging Service (MMS), Dual-Tone Multi-Frequency Signaling (DTMF), and/or Subscriber Identity Module Dialer (SIM dialer). The client computing entity 102 may also download code, changes, add-ons, and updates, for instance, to its firmware, software (e.g., including executable instructions, applications, program modules), and operating system.

According to some embodiments, the client computing entity 102 may include location determining aspects, devices, modules, functionalities, and/or similar words used herein interchangeably. For example, the client computing entity 102 may include outdoor positioning aspects, such as a location module adapted to acquire, for example, latitude, longitude, altitude, geocode, course, direction, heading, speed, universal time (UTC), date, and/or various other information/data. In some embodiments, the location module may acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data may be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data may be determined by triangulating the position of the client computing entity 102 in connection with a variety of other systems, including cellular towers, Wi-Fi access points, and/or the like. Similarly, the client computing entity 102 may include indoor positioning aspects, such as a location module adapted to acquire, for example, latitude, longitude, altitude, geocode, course, direction, heading, speed, time, date, and/or various other information/data. Some of the indoor systems may use various position or location technologies including RFID tags, indoor beacons or transmitters, Wi-Fi access points, cellular towers, nearby computing devices (e.g., smartphones, laptops), and/or the like. For instance, such technologies may include the iBeacons, Gimbal proximity beacons, Bluetooth Low Energy (BLE) transmitters, NFC transmitters, and/or the like. These indoor positioning aspects may be used in a variety of settings to determine the location of someone or something to within inches or centimeters.

The client computing entity 102 may also comprise a user interface (that may include an output device 316 (e.g., display, speaker, tactile instrument, etc.) coupled to a processing element 308) and/or a user input interface (coupled to a processing element 308). For example, the user interface may be a user application, browser, user interface, and/or similar words used herein interchangeably executing on and/or accessible via the client computing entity 102 to interact with and/or cause display of information/data from the computing entity 200, as described herein. The user input interface may comprise any of a plurality of input devices 318 (or interfaces) allowing the client computing entity 102 to receive code and/or data, such as a keypad (hard or soft), a touch display, voice/speech or motion interfaces, or other input device. In some embodiments including a keypad, the keypad may include (or cause display of) the conventional numeric (0-9) and related keys (#, *), and other keys used for operating the client computing entity 102 and may include a full set of alphabetic keys or set of keys that may be activated to provide a full set of alphanumeric keys. In addition to providing input, the user input interface may be used, for example, to activate or deactivate certain functions, such as screen savers and/or sleep modes.

The client computing entity 102 may also include volatile memory 322 and/or non-volatile memory 324, which may be embedded and/or may be removable. For example, the non-volatile memory 324 may be ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. The volatile memory 322 may be RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. The volatile and non-volatile memory may store databases, database instances, database management systems, data, applications, programs, program modules, scripts, code (source code, object code, byte code, compiled code, interpreted code, machine code, etc.) that embodies one or more machine learning models or other computer functions described herein, executable instructions, and/or the like to implement the functions of the client computing entity 102. As indicated, this may include a user application that is resident on the client computing entity 102 or accessible through a browser or other user interface for communicating with the computing entity 200 and/or various other computing entities.

In another embodiment, the client computing entity 102 may include one or more components or functionalities that are the same or similar to those of the computing entity 200, as described in greater detail above. In one such embodiment, the client computing entity 102 downloads, e.g., via network interface 320, code embodying machine learning model(s) from the computing entity 200 so that the client computing entity 102 may run a local instance of the machine learning model(s). As will be recognized, these architectures and descriptions are provided for example purposes only and are not limited to the various embodiments.

In various embodiments, the client computing entity 102 may be embodied as an artificial intelligence (AI) computing entity, such as an Amazon Echo, Amazon Echo Dot, Amazon Show, Google Home, and/or the like. Accordingly, the client computing entity 102 may be configured to provide and/or receive information/data from a user via an input/output mechanism, such as a display, a camera, a speaker, a voice-activated input, and/or the like. In certain embodiments, an AI computing entity may comprise one or more predefined and executable program algorithms stored within an onboard memory storage module, and/or accessible over a network. In various embodiments, the AI computing entity may be configured to retrieve and/or execute one or more of the predefined program algorithms upon the occurrence of a predefined trigger event.

### EXAMPLE SYSTEM OPERATIONS AND OPTIMIZATION MODEL OF THE DISCLOSURE

As indicated, various embodiments of the present disclosure make important technical contributions to emissions impact mitigation techniques. In particular, systems and methods are disclosed herein that implement a specially-configured machine learning approach for improving vehicle path prediction processes and emissions impact mitigation processes. By doing so, the machine-learning approach may provide an improvement in machine learning that may be practically applied to improve various computing tasks.

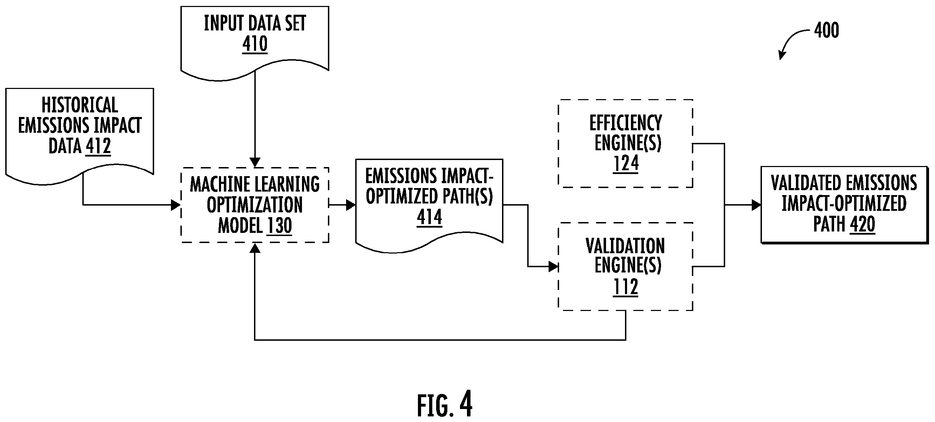

FIG. 4 illustrates a data flow diagram showing example data structures for emissions impact mitigation in accordance with at least some embodiments of the present disclosure. In some embodiments, input data set 410 is identified for a target vehicle operation. In some embodiments, the input data set 410 may be received from one or more data sources, such as but not limited to one or more repositories maintained by or otherwise associated with the emissions impact mitigation system 101, one or more client computing entities 102, and/or one or more third-party computing entities.

In some embodiments, a vehicle operation describes movement by a vehicle (e.g., aircraft, ship, automobile, motorcycle, train, forklift, or the like) from a first location to a second location. For example, a target vehicle operation may describe movement by a vehicle from a first location to a second location in the future. In some embodiments, a vehicle operation may include conveyance or otherwise transportation of one or more objects (e.g., animate objects such as people, animals, and/or the like and/or inanimate objects such as luggage, containers, and/or the like) from a first location to a second location via a vehicle configured to convey such objects. Examples of a target vehicle operation include, but not limited to, a prospective aircraft flight from a first city to a second city, a prospective automobile drive from a first city to another city, a prospective motorcycle drive from a first town to a second town, or the like. An emissions impact-optimized path may be determined for a target vehicle operation in accordance with various techniques described herein. For example, an emissions impact-optimized path may be determined for a vehicle operation in real time and before commencement of the vehicle operation.

In some embodiments, the input data set 410 describes input (e.g., one or more data items, data models, or the like) to a model configured to leverage the input data set to generate one or more outputs. In some embodiments, the input data set 410 is input to a machine learning optimization model 130. The input data set 410 may comprise a variety of data items and/or data models that may be leveraged by the machine learning optimization model 130 to perform one or more functions associated with generating an emissions impact-optimized path for a target operation in accordance with various embodiments of the present disclosure.

In some embodiments, the input data set 410 includes environment data such as, but not limited to, current emissions data (e.g., amount of CO2, CH4, and/or other greenhouse (GH) gas data) associated with one or more areas, geography, current weather conditions, predicted weather conditions during the target vehicle operation, current wind patterns, predicted wind patterns during the target vehicle operation, current temperature altitude effects, predicted temperature altitude effects during the target vehicle operation, eddy dissipation rate (EDR), season (e.g., spring, summer, fall, winter, autumn or the like) in which the target vehicle operation would occur, predicted emissions data (e.g., forecasted amount of CO2, CH4, and/or other greenhouse gas) associated with one or more areas, predicted emissions data for one more candidate vehicle paths for the target vehicle operation, and/or the like.

In some embodiments, predicted emissions data for one more candidate vehicle paths for the target vehicle operation may be generated using an environmental data model. For example, in some embodiments, the input data set 410 includes an environmental data model that may be leveraged to generate predicted emissions data for a candidate vehicle path for a target vehicle operation. In some embodiments, the environmental data model may describe parameters, hyper-parameters, and/or defined operations of a rules-based algorithm and/or the like. For example, in some embodiments, the environmental data model may comprise an environmental data algorithm that may be leveraged to generated predicted emissions data and/or other output for a candidate vehicle path.

Example parameters for the environmental data model may include current emissions data (e.g., amount of CO2, CH4, and/or other greenhouse gas data) associated with one or more areas, predicted emissions data (e.g., forecasted amount of CO2, CH4, and/or other greenhouse gas) associated with the one or more areas, geography, current weather conditions, predicted weather conditions during the target vehicle operation, current wind patterns, predicted wind patterns during the target vehicle operation, current temperature altitude effects, predicted temperature altitude effects during the target vehicle operation, EDR, season (e.g., spring, summer, fall, winter, autumn or the like) in which the target vehicle operation would occur, and/or the like.

Additionally, in some embodiments, the input data set 410 may include vehicle configuration data, logistics data, vehicle operation data and/or the like. It will be appreciated that the input data set 410 may depend on the prediction domain. As an example, for an aviation domain, the vehicle configuration data may include aircraft configuration data such as, but not limited to, fuel tank specification (e.g., fuel tank spec), fleet type, and/or engine type. Continuing with the aviation domain example, the logistics data may include airport data such as, but not limited to, fuel price, fuel ability, and/or the like. Further continuing with the aviation domain, the vehicle operation data may include flight data such as candidate flight paths, cruise altitude (cruise altitude), city pair, and/or the like.

In some embodiments, an emissions impact-optimized path 414 is determined for the vehicle operation using a machine learning optimization model 130 and based on the input data set 410 and historical emissions impact data 412. In some embodiments, determining the emissions impact-optimized path 414 comprises generating, based on the input data set and the historical emissions impact data, predicted emissions impact data for each candidate vehicle path of one or more candidate vehicle paths, and selecting the emissions impact-optimized path from the one or more candidate vehicle paths based on the predicted emissions impact data for each candidate vehicle path. In various embodiments, the emissions impact-optimized path 414 is determined is before commencement of the vehicle operation. For example, the emissions impact-optimized path 414 may be determined in real time and before commencement of the vehicle operation.

In some embodiments a candidate vehicle path describes a path that a target vehicle may travel or otherwise traverse. In some embodiments, candidate vehicle paths may be input to the machine learning optimization model 130. For example, in some embodiments, the input data set 410 may include data that describes one or more candidate vehicle paths for the target vehicle operation. In some embodiments, the machine learning optimization model 130 may be configured to generate data that describes a candidate vehicle path. For example, in some embodiments, the machine learning optimization model 130 may be configured to generate one or more synthetic candidate vehicle paths.

In some embodiments, an emissions impact-optimized path 414 describes a candidate (e.g., proposed) vehicle path for a target vehicle operation that takes into consideration one or more key performance indicators (KPIs) including, but not limited to, emissions impact (e.g., greenhouse gas emissions impact). For example, the input data set 410 and historical emissions impact data 412 may be input to the machine learning optimization model 130 to output one or more emissions impact-optimized paths 414 based on analysis of the input data set 410 and historical emissions impact data 412. In some embodiments, the historical emissions impact data 412 may be retrieved or otherwise accessed from an historical data repository, which may be associated with the emissions impact mitigation system 101.

In some embodiments, the historical emissions impact data 412 comprises historical operational data for each historical vehicle operation of one or more historical vehicle operations, historical seasonal-based emissions impact data for each historical vehicle operation of the one or more historical vehicle operations, and/or other historical data that may be leveraged by the machine learning optimization model 130 to generate an emissions impact-optimized path 414. In some embodiments, the historical operational data may be based upon a navigation database. For example, the historical operational data may be retrieved or otherwise accessed from a navigation database. In some embodiments, the historical data repository may be separate from the navigation database. In some embodiments, the historical data repository may comprise the navigation database or embodied as the navigation database.

In some embodiments, the historical operational data for each historical vehicle operation comprises historical resource usage data (e.g., fuel burned during the historical vehicle operation, or the like) associated with one or more high-density emissions zones along the historical vehicle path for the historical vehicle operation and resource usage data associated with one or more low-density emissions zones along the historical vehicle path for the historical vehicle operation. Alternatively or additionally, in some embodiments, the historical operational data for each historical vehicle operation further comprises duration of the historical vehicle operation in the one or more high-density emissions zones and duration of the historical vehicle operation in the one or more low-density emissions zones (e.g., considering previously approved vehicle operation plan by a control system such as previously approved flight plan by air traffic control in an aviation domain).

In some embodiments, a high-density emissions zone is an area associated with an amount (e.g., mass per unit volume) of greenhouse gas (e.g., CO2, CH4, and/or the like) that exceeds a predetermined amount of greenhouse gas. In some embodiments, a low-density emissions zone is an area associated with an amount (e.g., mass per unit volume) of greenhouse gas that does not exceed the predetermined amount (e.g., less than or equal to the predetermined amount).

In some embodiments, historical seasonal-based emissions impact data includes data that describes a quantified emissions impact associated with an historical vehicle operation which may depend at least in part on the season (e.g., spring, summer, fall, winter, autumn or the like). For example, seasonal variations in temperature and vegetation can affect the rate of natural processes that produce and consume greenhouse gases. For instance, in warmer months, biological activity, such as plant growth and microbial activity, tends to increase, leading to more CO2 being absorbed through photosynthesis. Conversely, during colder months, these processes slow down, potentially resulting in a net increase in CO2 concentrations in the atmosphere. For example, net CO2 density varies per season and generally may be higher during a particular month of the year as compared to another month of the year. Further, emissions (e.g., greenhouse gas emissions) in a high-density emissions zone would multifold the greenhouse gas emissions impact in such high-emissions density zones and outweigh the impact in less-density emissions zones.

In some embodiments, seasonal-based emissions impact data may be calculated or otherwise determined based on historical vehicle operation data as shown in the example illustrated in Table 1 below.

**Table 1**

| **Aircraft Type** | **City Pair** | **Total Trip Distance** | **High Density** | | **Low Density** | | **Overall GH Impact** |
|---|---|---|---|---|---|---|---|
| | | | **Distance** | **Fuel Burn** | **Distance** | **Fuel Burn** | |
| A320 | LSGG-EFBO | 12536 | 250 | 682.5 | 12286 | 33540.78 | 110302.2648 |
| B747 | VOMD-VOMM | 5230 | 125 | 341.25 | 5105 | 13936.65 | 46196.514 |
| A350 | VOBL-VOHY | 600 | 0 | 0 | 600 | 1638 | 5176.08 |
| A320 | KPHX-LSGG | 8000 | 115 | 313.95 | 7885 | 21526.05 | 70006.482 |
| A320 | LSGG-EFBO | 12536 | 250 | 682.5 | 12286 | 33544.78 | 110302.2648 |
| B747 | VOMD-VOMM | 5230 | 125 | 341.25 | 5105 | 13936.65 | 46196.514 |
| A350 | VOBL-VOHY | 600 | 0 | 0 | 600 | 1638 | 5176.08 |
| A320 | KPHX-LSGG | 8000 | 115 | 313.95 | 7885 | 21526.05 | 70006.482 |

For example, as shown in Table 1 above, seasonal-based emissions impact data may be calculated or otherwise determined based on (i) historical resource usage data associated with one or more high-density emissions zones along historical vehicle path for the historical vehicle operation, (ii) historical resource usage data associated with one or more low-density emissions zones along the historical vehicle path for the historical vehicle operation, (iii) duration of the historical vehicle operation in the one or more high-density emissions zones (iv) duration of the historical vehicle operation in the one or more low-density emissions zones, and/or (v) total distance traveled during the vehicle operation. The (i) historical resource usage data associated with one or more high-density emissions zones along historical vehicle path for the historical vehicle operation, (ii) historical resource usage data associated with one or more low-density emissions zones along the historical vehicle path for the historical vehicle operation, (iii) duration of the historical vehicle operation in the one or more high-density emissions zones (iv) duration of the historical vehicle operation in the one or more low-density emissions zones, and/or (iv) total distance traveled during the vehicle operation may have a relation (e.g., proportionate relationship) with current/live emissions-impact data and/or current/live emissions data (e.g., greenhouse data).

In some embodiments, the emissions impact mitigation system 101 may gather, collect, aggregate or the like, historical operational data associated with historical vehicle operations and store the historical operational data in a historical data repository and/or navigation database along with corresponding seasonal-based emissions impact data. For example, the emissions impact mitigation system 101 may be configured to calculate or otherwise determine seasonal-based emissions impact data for historical vehicle operations as described above. In some embodiments, the historical seasonal-based emissions impact data may be obtained from one or more data sources.

In some embodiments, the machine learning optimization model is a data entity that describes parameters, hyper-parameters, and/or defined operations of a rules-based algorithm and/or machine learning model (e.g., model including at least one or more rule-based layers, one or more layers that depend on trained parameters, coefficients, and/or the like), and/or the like. The machine learning optimization model may be configured, trained, and/or the like to determine an emissions impact-optimized path for a target vehicle operation based on input data set and historical emissions impact data as described above. The machine learning optimization model may include one or more of any type of machine learning models including one or more supervised, unsupervised, semi-supervised, reinforcement learning models, and/or the like.

In some embodiments, the machine learning optimization model 130 comprises a reinforcement learning model. For example, the machine learning optimization model 130 may be a reinforcement learning-based machine learning model. In some embodiments, the machine learning optimization model 130 may be trained using reward-based reinforcement learning methods and training data set aggregated from a plurality of historical vehicle operations. For example, the machine learning optimization model 130 may be a reinforcement learning model that operates on feedback acquired from output of one or more validation operations performed with respect to output (e.g., emissions impact-optimized path) of the machine learning optimization model 130, as further described herein. In some embodiments, the machine learning optimization model 130 may be updated, fine-tuned, re-trained, and/or the like based on the reward mechanism such that the machine learning optimization model 130 is continuously learning and improved.

In some embodiments, the training data may comprise domain-specific data. As an example, for an aviation domain, the training data may include, but not limited to, current emissions data (e.g., amount of CO2, CH4, and/or other greenhouse gas data) associated with one or more areas, geography, current weather conditions, predicted weather conditions during the historical vehicle operation, current wind patterns, predicted wind patterns during the historical vehicle operation, current temperature altitude effects, predicted temperature altitude effects during the historical vehicle operation, EDR, season (e.g., spring, summer, fall, winter, autumn or the like) in which the historical vehicle operation occurred, predicted emissions data (e.g., forecasted amount of CO2, CH4, and/or other greenhouse gas) associated with one or more areas, predicted emissions data for one more candidate vehicle paths for the historical vehicle operation, and/or the like.

In some embodiments, the emissions impact-optimized path 414 is evaluated based on one or more validation engines to generate an evaluation output (e.g., evaluation result). Additionally or alternatively, in some embodiments, the emissions impact-optimized path 414 is evaluated based on one or more efficiency engines to generate an evaluation output. In some embodiments evaluating the emissions impact-optimized path based on the one or more validation engines comprises determining whether the emissions impact-optimized path satisfies one or more operational KPIs (e.g., safety, time, distance, logistics, and/or the like). For example, one or more validation engines may be applied to the emissions impact-optimized path 414 to generate at least a portion of the evaluation output that reflects whether the emissions impact-optimized path 414 satisfies one or more predetermined operational KPIs.

In some embodiments, evaluating the emissions impact-optimized path based on the one or more efficiency engines comprises determining whether the emissions impact-optimized path satisfies one or more efficiency KPIs (e.g., fuel consumption, and/or the like). For example, one or more efficiency engines may be applied to the emissions impact-optimized path 414 to generate at least a portion of the evaluation output that reflects whether the emissions impact-optimized path 414 satisfies one or more predetermined efficiency KPIs.

In some embodiments, a validation engine is configured via hardware, software, firmware, and/or a combination thereof, to generate an evaluation output for an emissions impact-optimized path. For example, in some embodiments, a validation engine is configured via software and may comprise one or more specially-configured algorithms for evaluating an emissions impact-optimized path output of the machine learning optimization model 130. In some embodiments, as further described below one or more validation engines may comprise a digital twin (e.g., a software copy of one or more systems, engines, databases, and/or the like).

In some embodiments, an efficiency engine is configured via hardware, software, firmware, and/or a combination thereof, to generate an evaluation output for an emissions impact-optimized path. For example, in some embodiments, an efficiency engine is configured via software and may comprise one or more specially-configured algorithms for evaluating an emissions impact-optimized path output of the machine learning optimization model 130.

In some embodiments, a validated emissions impact-optimized path 420 for the target vehicle operation is determined based on the emissions impact-optimized path and the evaluation output. In some embodiments, in response to determining that the emissions impact-optimized path is associated with a positive evaluation output (e.g., positive evaluation result) the emissions impact-optimized path is selected or otherwise adopted as the validated emissions impact-optimized path 420 for the target operation. In some embodiments, in response to determining that the emissions impact-optimized path is associated with a negative evaluation output (e.g., negative evaluation result) the emissions impact-optimized path is rejected, and a second emissions-impact optimized path is determined via the machine learning optimization model and evaluated based on the one or more validation engines 112 and/or one or more efficiency engines 124. In various embodiments, the validated emissions impact-optimized path 420 is determined in real time and before commencement of the target vehicle operation. In aviation domain, for example, the validated emissions impact-optimized path 420 may be determined in real time and preflight.

In some embodiments, a validated emissions impact-optimized path 420 is an emissions impact-optimized path that satisfies one or more criteria. For example, validated emissions impact-optimized path 420 may describe an emissions impact-optimized path that satisfies one or more KPIs defined by the validation engines(s) 112 and/or the efficiency engine, such as safety KPI, fuel usage KPI, duration KPI, or the like. In this regard a positive evaluation output may describe output of the validation engine(s) 112 and/or efficiency engine(s) 124 that indicates satisfaction by the emissions impact-optimized path output 114 of the one or more criteria, while a negative evaluation output may describe output of the validation engine(s) 112 and/or efficiency engine(s) 124 that indicates failure of the emissions impact-optimized path output 114 to satisfy of the one or more criteria.

In some embodiments, the machine learning optimization model 130 may be configured to generate a plurality of emissions impact-optimized paths and rank the plurality of emissions impact-optimized paths. In some embodiments, in response to a negative evaluation output the second emissions impact-optimized path may be selected from the plurality of emissions impact-optimized paths and evaluated by the validation engine(s) 112 and/or efficiency engines(s) 124.

In some embodiments, the evaluation output is leveraged to finetune and/or re-train, the machine learning optimization model 130. For example, emissions impact-optimized output(s) associated with the evaluation process may be included in the training data for the machine learning optimization model 130 to fine, re-train, and/or the like the machine learning optimization model 130.

In some embodiments, a vehicle operation plan for the target vehicle operation is generated based on the validated emissions impact-optimized path 420. For example, the vehicle operation plan may reflect the validated emissions impact-optimized path 420.

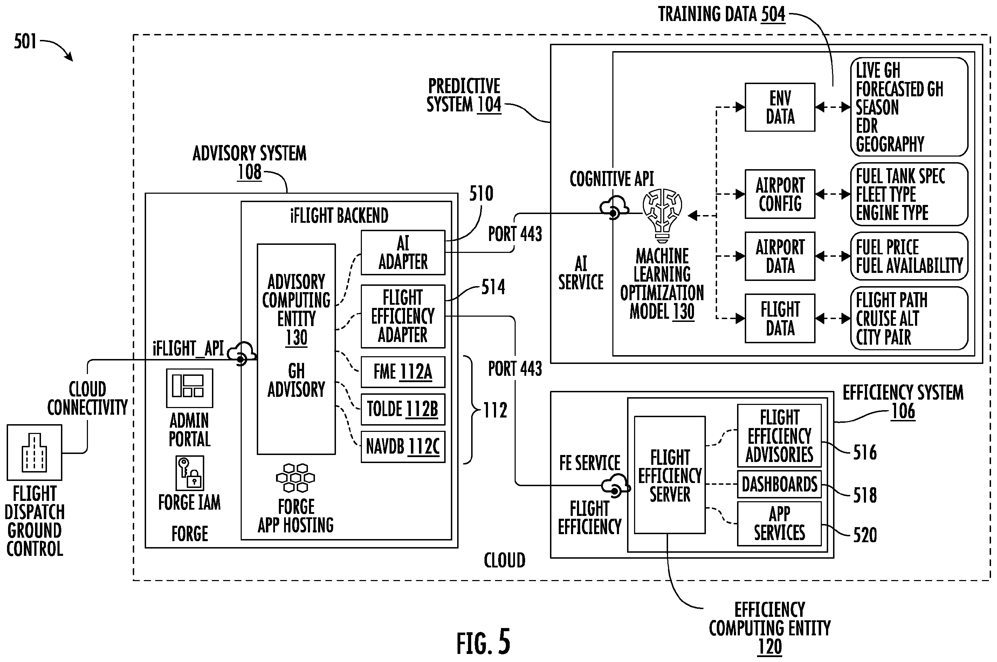

FIG. 5 illustrates an implementation of an emissions impact mitigation system 101 in accordance with at least some embodiments of the present disclosure. Specifically, FIG. 5 illustrates an emissions impact mitigation system 501 which may be used in an aviation domain. While the emissions impact mitigation system 501 may illustrate one or more components not shown in FIG. 1, include more or less components, or illustrated differently, it should be understood, that the emissions impact mitigation system 501 is configured to perform the same functions associated with the emissions impact mitigation system 101 in the same manner as described above with reference to the emissions impact mitigation system 101.

As shown in FIG. 5, the emissions impact mitigation system 501 may be embodied as a cloud-based system. The example emissions impact mitigation system 501 may include a predictive system 104, an efficiency system 106, and an advisory system 108 as described above with reference to FIG. 1. As described with reference to FIG. 1, the predictive system 104, efficiency system 106, and/or advisory system 108 may comprise storage subsystems that may be configured to store input data, training data, and/or the like that may be used by the respective systems to perform predictive data analysis and/or training operations of the present disclosure. For example, one or more of the systems illustrated in FIG. 1 may be associated with the historical data repository configured to store historical emissions impact data associated with a plurality of historical vehicle operations (e.g., historical flights in aviation domain).

In some embodiments, the predictive system 104, efficiency system 106, and/or advisory system 108 are communicatively coupled using one or more wired and/or wireless communication techniques.

As shown in FIG. 5, the predictive system 104 includes a machine learning optimization model 130 (e.g., as described above) that is configured for generating emissions impact optimized path(s) for a target vehicle operation (e.g., future flight in the aviation domain example). As described above the machine learning optimization model 130 may be trained based on trading data 504 comprising a plurality of data items and/or data models. In some embodiments, the machine learning optimization model 130 is a reinforcement-based machine learning model. In some embodiments, the machine learning optimization model 130 comprises a generative AI model.

As shown in FIG. 5, the advisory system 108 may include an advisory computing entity 110 (e.g., greenhouse (GH) Advisory in the illustrated example implementation) and a plurality of validation engines 112. The validation engines may comprise digital twins of one or more systems, engines, databases, or the like leveraged in the aviation domain for flight planning and/or management (e.g., software copies of one or more systems, engines, databases, or the like leveraged in the aviation domain for flight planning and/or management). As shown in the illustrated implementation, the advisory system 108 includes an FME engine 112A. The FME engine 112A may be a digital twin of a flight management system (FMS). The FMS may comprise an onboard system physically installed in an aircraft (e.g., a cockpit). The FMS may be programmed and/or customized to service the flight crew of aircraft. The advisory system 108 may also include a TOLDE engine 112B. The TOLDE engine 112B may be a digital twin of a take-off and landing engine. Further, the advisory system 108 may include and NAVDB engine 112C. The NAVDB engine 112C may be a digital twin of a navigation database comprising navigation routes.

As shown in FIG. 5, the advisory system 108 may include an AI adapter 510 configured to facilitate or otherwise allow for communication between the predictive system 104 and the advisory system 108. The advisory system 108 may also include a flight efficiency adapter 514 configured to facilitate or otherwise allow for communication between the efficiency system 106 and the advisory system 108. The advisory computing entity 110 with the validation engines 112 and the adapters (e.g., AI adapter 510 and flight efficiency adapter 514) may comprise part of a backend system. For example, the advisory system 108 or a portion thereof may comprise a backend system.

The efficiency system 106 in the illustrated implementation includes a flight efficiency computing entity 120 embodied as a server (e.g., flight efficiency server). The efficiency system 106 may also include a flight efficiency advisories 516, a dashboard 518, and application services 520 (e.g., app services) configured for facilitating or performing one or more functions associated with the efficiency system 106.

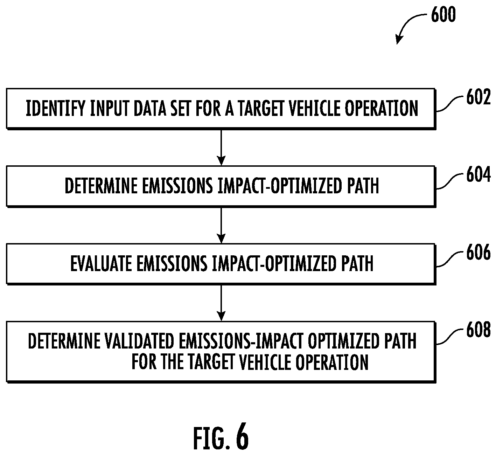

FIG. 6 is a flowchart diagram of an example process 600 for generating emissions-impact optimized path. FIG. 6 illustrates an example process 600 for explanatory purposes. Although the example process 600 depicts a particular sequence of steps/operations, the sequence may be altered without departing from the scope of the present disclosure. For example, some of the steps/operations depicted may be performed in parallel or in a different sequence that does not materially impact the function of the process 600. In other examples, different components of an example device or system that implements the process 600 may perform functions at substantially the same time or in a specific sequence.

In some embodiments, the process includes at step/operation 602 identifying input data set for a target vehicle operation. For example, the emissions impact mitigation system 101 (via the predictive computing entity 118 of the predictive system 104) may receive the input data set from one or more data sources, such as but not limited to one or more repositories maintained by the emissions impact mitigation system 101, one or more client computing entities 102, and/or one or more third-party systems.

In some embodiments, the process 600 includes at step/operation 604 determining an emissions impact-optimized path for the target vehicle operation using a machine learning optimization model 130 and based on the input data set and historical emissions impact data. For example, the predictive computing entity may retrieve, directly or indirectly, historical emission impact data from an historical data repository (e.g., as described above) and provide the input data set and historical emissions impact data as input to a machine learning optimization model 130 configured to analyze the input dataset and the historical emissions impact data to determine the emissions impact-optimized path. In some embodiments, to determine the emissions impact-optimized path, the predictive computing entity 118 using the machine learning optimization model 130 may generate based on the input data set and the historical emissions impact data, predicted emissions impact data for each candidate vehicle path of one or more candidate vehicle paths, and select the emissions impact-optimized path from the one or more candidate vehicle paths based on the predicted emissions impact data for each candidate vehicle path.

In some embodiments, the process 600 includes at step/operation 606 evaluating the emissions impact-optimized path based on one or more validation engines and/or one or more emissions efficiency engines to generate an evaluation output (e.g., evaluation result). For example, the emissions impact mitigation system 501 (via the advisory computing entity 110) may evaluate the emissions impact-optimized path based on one or more validation engines to determine whether the emissions impact-optimized path satisfies one or more criteria (e.g., one or more operational KPIs such as safety, time, distance, logistics, and/or the like). Alternatively or additionally, for example, the advisory computing entity 110 may communicate with the efficiency computing entity 120 to evaluate the emissions impact-optimized path, wherein the efficiency computing entity 120 via an efficiency engine may evaluate the emissions impact-optimized path to determine whether the emissions impact-optimized path satisfies one or more criteria (e.g., one or more efficiency KPIs such as fuel consumption, and/or the like).

In some embodiments, the process 600 includes at step/operation 608, determining a validated emissions impact-optimized path for the target vehicle operation based on the emissions impact-optimized path and the evaluation output. For example, the advisory system 108 (e.g., via the advisory computing entity 110) may be configured to determine whether the evaluation output is a positive evaluation output or negative evaluation output. For example, the advisory system 108 (e.g., via the advisory computing entity 110), in response to determining that the emissions impact-optimized path is associated with a positive evaluation output, may select or otherwise adopt the emissions impact-optimized path as the validated emissions impact-optimized path for the target operation. In some embodiments, in response to determining that the emissions impact-optimized path is associated with a negative evaluation output, the advisory system 108 (e.g., via the advisory computing entity 110) may reject the second emissions-impact optimized path. In some embodiments, the advisory system 108 (e.g., via the advisory computing entity 110) may communicate with the predictive system 104 (e.g., via the predictive computing entity 118) to provide a second emissions-impact optimized path using the machine learning optimization model.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an internetwork (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In certain implementations, multitasking and parallel processing may be advantageous.

## Claims

1. A computing system (101, 501) comprising memory (210, 215) and one or more processors (205) communicatively coupled to the memory (210, 215), the one or more processors (205) configured to:
identify (602) input data set (41) for a target vehicle operation;
determine (604), using a machine learning optimization model (130), an emissions impact-optimized path (414) based on the input data set (410) and historical emissions impact data (412) associated with a plurality of historical vehicle operations;
evaluate (606) the emissions impact-optimized path (414), based on one or more validation engines (112), to generate an evaluation output, wherein the one or more validation engines are configured to determine whether the emissions impact-optimized path satisfies one or more operational KPIs that comprises at least safety, time, distance, and logistics; and
determine (608) a validated emissions impact-optimized path (420) for the target vehicle operation based on the emissions impact-optimized path (414) and the evaluation output.

2. The computing system (101, 501) of claim 1, wherein the historical emissions impact data (412) comprises i) historical operational data for each historical vehicle operation of one or more historical vehicle operations and ii) historical seasonal-based emissions impact data for each historical vehicle operation of the one or more historical vehicle operations.

3. The computing system (101, 501) of claim 2, wherein the historical operational data for each historical vehicle operation comprises i) historical resource usage data associated with one or more high-density emissions zones along historical vehicle path for the historical vehicle operation and ii) historical resource usage data associated with one or more low-density emissions zones along the historical vehicle path for the historical vehicle operation.

4. The computing system (101, 501) of claim 3, wherein the historical operational data for each historical vehicle operation further comprises i) duration of the historical vehicle operation in the one or more high-density emissions zones and ii) duration of the historical vehicle operation in the one or more low-density emissions zones.

5. The computing system (101, 501) of claim 1, wherein the machine learning optimization model is a reinforcement learning-based machine learning model.

6. The computing system (101, 501) of claim 1, wherein the one or more processors (205) are configured to determine the emissions impact-optimized path (414) by:
generating, based on the input data set (410) and the historical emissions impact data (412), predicted emissions impact data for each candidate vehicle path of one or more candidate vehicle paths; and
selecting the emissions impact-optimized path (414) from the one or more candidate vehicle paths based on the predicted emissions impact data for each candidate vehicle path.

7. The computing system (101, 501) of claim 1, wherein the one or more processors (205) are configured to evaluate the emissions impact-optimized path (414) based on the one or more validation engines (112) by determining whether the emissions impact-optimized path (414) satisfies one or more operational key performance indicators.

8. The computing system (101, 501) of claim 1, wherein the one or more processors (205) are further configured to evaluate the emissions impact-optimized path (414) to generate the evaluation output based on one or more efficiency engines (124) by determining whether the emissions impact-optimized path (414) satisfies one or more efficiency key performance indicators.

9. The computing system (101, 501) of claim 1, wherein the one or more processors (205) are further configured to generate a vehicle operation plan for the target vehicle operation based on the validated emissions impact-optimized path (420).

10. The computing system (101, 501) of claim 1, wherein the input data set (410) comprises an environmental model, wherein the one or more processors (205) are configured to determine the emissions impact-optimized path (414) by:
generating predicted emissions data for one or more candidate vehicle paths; and
analyzing the predicted emissions data (410) with the input data set and the historical emissions impact data (412) to determine the emissions impact-optimized path (414).

11. A computer-implemented method (600) comprising:
identifying (602), by one or more processors (205), input data set (410) for a target vehicle operation;
determining (604), by the one or more processors (205) using a machine learning optimization model (130), an emissions impact-optimized path (414) based on the input data set (410) and historical emissions impact data (412) associated with a plurality of historical vehicle operations;
evaluating (606), by the one or more processors (205), the emissions impact-optimized path (414) based on one or more validation engines (112) to generate an evaluation output, wherein the one or more validation engines are configured to determine whether the emissions impact-optimized path satisfies one or more operational KPIs that comprises at least safety, time, distance, and logistics; and
determining (608), by the one or more processors (205), a validated emissions impact-optimized path (420) for the target vehicle operation based on the emissions impact-optimized path (414) and the evaluation output.

12. The computer-implemented method (600) of claim 11, wherein the historical emissions impact data (412) comprises i) historical operational data for each historical vehicle operation of one or more historical vehicle operations and ii) historical seasonal-based emissions impact data for each historical vehicle operation of the one or more historical vehicle operations.

13. The computer-implemented method (600) of claim 12, wherein the historical operational data for each historical vehicle operation comprises one or more of i) historical resource usage data associated with one or more high-density emissions zones along historical vehicle path for the historical vehicle operation, ii) historical resource usage data associated with one or more low-density emissions zones along the historical vehicle path for the historical vehicle operation, iii) duration of the historical vehicle operation in the one or more high-density emissions zones, and iv) duration of the historical vehicle operation in the one or more low-density emissions zones.

14. The computer-implemented method (600) of claim 11, wherein the machine learning optimization model (130) is a reinforcement learning-based machine learning model.

15. A computer-implemented method comprising:
identifying, by one or more processors (205), input data set (410) for a target vehicle operation;
generating, by the one or more processors (205) and using a machine learning optimization model (130), predicted emissions impact data for each candidate vehicle path of one or more candidate vehicle paths based on the input data set (410) and historical emissions impact data (412); and
selecting, by the one or more processors (205) and using the machine learning optimization model (130), an emissions impact-optimized path (414) from the one or more candidate vehicle paths based on the predicted emissions impact data for each candidate vehicle path, wherein the selected emissions impact-optimized path is evaluated by determining that the emissions impact-optimized path satisfies one or more operational KPIs that comprises at least safety, time, distance, and logistics.

## Patentansprüche

1. Rechensystem (101, 501), umfassend einen Speicher (210, 215) und einen oder mehrere Prozessoren (205), die kommunizierend mit dem Speicher (210, 215) gekoppelt sind, wobei der eine oder die mehreren Prozessoren (205) dazu konfiguriert sind:
einen Eingabedatensatz (41) für einen Zielfahrzeugbetriebsvorgang zu identifizieren (602);
unter Verwendung eines Maschinenlernen-Optimierungsmodells (130) einen auswirkungsoptimierten Emissionspfad (414) auf Basis des Eingabedatensatzes (410) und historischer Emissionsauswirkungsdaten (412), die einer Vielzahl von historischen Fahrzeugbetriebsvorgängen zugehörig sind, zu bestimmen (604);
den auswirkungsoptimierten Emissionspfad (414) auf Basis von einer oder mehreren Validierungs-Engines (112) zu bewerten (606), um eine Bewertungsausgabe zu erzeugen, wobei die eine oder die mehreren Validierungs-Engines dazu konfiguriert sind, zu bestimmen, ob der auswirkungsoptimierte Emissionspfad eine oder mehrere betriebliche KPIs erfüllt, die mindestens Sicherheit, Zeit, Entfernung und Logistik umfassen; und
einen validierten auswirkungsoptimierten Emissionspfad (420) für den Zielfahrzeugbetriebsvorgang auf Basis des auswirkungsoptimierten Emissionspfades (414) und der Bewertungsausgabe zu bestimmen (608).

2. Rechensystem (101, 501) nach Anspruch 1, wobei die historischen Emissionsauswirkungsdaten (412) Folgendes umfassen: i) historische Betriebsdaten für jeden historischen Fahrzeugbetriebsvorgang von einem oder mehreren historischen Fahrzeugbetriebsvorgängen und ii) historische saisonbasierte Emissionsauswirkungsdaten für jeden historischen Fahrzeugbetriebsvorgang des einen oder der mehreren historischen Fahrzeugbetriebsvorgänge.

3. Rechensystem (101, 501) nach Anspruch 2, wobei die historischen Betriebsdaten für jeden historischen Fahrzeugbetriebsvorgang Folgendes umfassen: i) historische Ressourcenverwendungsdaten, die einer oder mehreren Emissionszonen von hoher Dichte entlang eines historischen Fahrzeugpfades für den historischen Fahrzeugbetriebsvorgang zugehörig sind und ii) historische Ressourcenverwendungsdaten, die einer oder mehreren Emissionszonen von niedriger Dichte entlang des historischen Fahrzeugpfades für den historischen Fahrzeugbetriebsvorgang zugehörig sind.

4. Rechensystem (101, 501) nach Anspruch 3, wobei die historischen Betriebsdaten für jeden historischen Fahrzeugbetriebsvorgang ferner Folgendes umfassen: i) eine Dauer des historischen Fahrzeugbetriebsvorgangs in der einen oder den mehreren Emissionszonen von hoher Dichte und ii) eine Dauer des historischen Fahrzeugbetriebsvorgangs in der einen oder den mehreren Emissionszonen von niedriger Dichte.

5. Rechensystem (101, 501) nach Anspruch 1, wobei das Maschinenlernen-Optimierungsmodell ein bestärkendes lernbasiertes Maschinenlernen-Modell ist.

6. Rechensystem (101, 501) nach Anspruch 1, wobei der eine oder die mehreren Prozessoren (205) dazu konfiguriert sind, den auswirkungsoptimierten Emissionspfad (414) durch Folgendes zu bestimmen:
Erzeugen, auf Basis des Eingabedatensatzes (410) und der historischen Emissionsauswirkungsdaten (412), von prognostizierten Emissionsauswirkungsdaten für jeden Kandidatenfahrzeugpfad von einem oder mehreren Kandidatenfahrzeugpfaden; und
Auswählen des auswirkungsoptimierten Emissionspfades (414) aus dem einen oder den mehreren Kandidatenfahrzeugpfaden auf Basis der prognostizierten Emissionsauswirkungsdaten für jeden Kandidatenfahrzeugpfad.

7. Rechensystem (101, 501) nach Anspruch 1, wobei der eine oder die mehreren Prozessoren (205) dazu konfiguriert sind, den auswirkungsoptimierten Emissionspfad (414) auf Basis der einen oder der mehreren Validierungs-Engines (112) zu bewerten, durch Bestimmen, ob der auswirkungsoptimierte Emissionspfad (414) eine oder mehrere Betriebsleistungskennzahlen erfüllt.

8. Rechensystem (101, 501) nach Anspruch 1, wobei der eine oder die mehreren Prozessoren (205) ferner dazu konfiguriert sind, den auswirkungsoptimierten Emissionspfad (414) zu bewerten, um die Bewertungsausgabe auf Basis von einer oder mehreren Effizienz-Engines (124) zu erzeugen, durch Bestimmen, ob der auswirkungsoptimierte Emissionspfad (414) eine oder mehrere Effizienzleistungskennzahlen erfüllt.

9. Rechensystem (101, 501) nach Anspruch 1, wobei der eine oder die mehreren Prozessoren (205) ferner dazu konfiguriert sind, einen Fahrzeugbetriebsplan für den Zielfahrzeugbetriebsvorgang auf Basis des validierten auswirkungsoptimierten Emissionspfades (420) zu erzeugen.

10. Rechensystem (101, 501) nach Anspruch 1, wobei der Eingabedatensatz (410) ein Umweltmodell umfasst, wobei der eine oder die mehreren Prozessoren (205) dazu konfiguriert sind, den auswirkungsoptimierten Emissionspfad (414) durch Folgendes zu bestimmen:
Erzeugen von prognostizierten Emissionsdaten für einen oder mehrere Kandidatenfahrzeugpfade; und
Analysieren der prognostizierten Emissionsdaten (410) mit dem Eingabedatensatz und den historischen Emissionsauswirkungsdaten (412), um den auswirkungsoptimierten Emissionspfad (414) zu bestimmen.

11. Computerimplementiertes Verfahren (600), umfassend:
Identifizieren (602), durch einen oder mehrere Prozessoren (205), eines Eingabedatensatzes (410) für einen Zielfahrzeugbetriebsvorgang;
Bestimmen (604), durch den einen oder die mehreren Prozessoren (205) unter Verwendung eines Maschinenlernen-Optimierungsmodells (130), eines auswirkungsoptimierten Emissionspfades (414) auf Basis des Eingabedatensatzes (410) und historischer Emissionsauswirkungsdaten (412), die einer Vielzahl von historischen Fahrzeugbetriebsvorgängen zugehörig sind;
Bewerten (606), durch den einen oder die mehreren Prozessoren (205), des auswirkungsoptimierten Emissionspfades (414) auf Basis von einer oder mehreren Validierungs-Engines (112), um eine Bewertungsausgabe zu erzeugen, wobei die eine oder die mehreren Validierungs-Engines dazu konfiguriert sind, zu bestimmen, ob der auswirkungsoptimierte Emissionspfad eine oder mehrere betriebliche KPIs erfüllt, die mindestens Sicherheit, Zeit, Entfernung und Logistik umfassen; und
Bestimmen (608), durch den einen oder die mehreren Prozessoren (205), eines validierten auswirkungsoptimierten Emissionspfades (420) für den Zielfahrzeugbetriebsvorgang auf Basis des auswirkungsoptimierten Emissionspfades (414) und der Bewertungsausgabe.

12. Computerimplementiertes Verfahren (600) nach Anspruch 11, wobei die historischen Emissionsauswirkungsdaten (412) Folgendes umfassen: i) historische Betriebsdaten für jeden historischen Fahrzeugbetriebsvorgang eines oder mehrerer historischen Fahrzeugbetriebsvorgängen und ii) historische saisonbasierte Emissionsauswirkungsdaten für jeden historischen Fahrzeugbetriebsvorgang des einen oder der mehreren historischen Fahrzeugbetriebsvorgänge.

13. Computerimplementiertes Verfahren (600) nach Anspruch 12, wobei die historischen Betriebsdaten für jeden historischen Fahrzeugbetriebsvorgang eines oder mehrere von Folgendem umfassen: i) historische Ressourcenverwendungsdaten, die einer oder mehreren Emissionszonen von hoher Dichte entlang eines historischen Fahrzeugpfades für den historischen Fahrzeugbetriebsvorgang zugehörig sind, ii) historische Ressourcenverwendungsdaten, die einer oder mehreren Emissionszonen von niedriger Dichte entlang des historischen Fahrzeugpfades für den historischen Fahrzeugbetriebsvorgang zugehörig sind, iii) eine Dauer des historischen Fahrzeugbetriebsvorgangs in der einen oder den mehreren Emissionszonen von hoher Dichte, und iv) eine Dauer des historischen Fahrzeugbetriebsvorgangs in der einen oder den mehreren Emissionszonen von niedriger Dichte.

14. Computerimplementiertes Verfahren (600) nach Anspruch 11, wobei das Maschinenlernen-Optimierungsmodell (130) ein bestärkendes lernbasiertes Maschinenlernen-Modell ist.

15. Computerimplementiertes Verfahren, umfassend:
Identifizieren, durch einen oder mehrere Prozessoren (205), eines Eingabedatensatzes (410) für einen Zielfahrzeugbetriebsvorgangs;
Erzeugen, durch den einen oder die mehreren Prozessoren (205) unter Verwendung eines Maschinenlernen-Optimierungsmodells (130), von prognostizierten Emissionsauswirkungsdaten für jeden Kandidatenfahrzeugpfad von einem oder mehreren Kandidatenfahrzeugpfaden auf Basis des Eingabedatensatzes (410) und historischer Emissionsauswirkungsdaten (412); und
Auswählen, durch den einen oder die mehreren Prozessoren (205) und unter Verwendung des Maschinenlernen-Optimierungsmodells (130), eines auswirkungsoptimierten Emissionspfades (414) aus dem einen oder den mehreren Kandidatenfahrzeugpfaden auf Basis der prognostizierten Emissionsauswirkungsdaten für jeden Kandidatenfahrzeugpfad, wobei der ausgewählte auswirkungsoptimierte Emissionspfad bewertet wird durch Bestimmen, dass der auswirkungsoptimierte Emissionspfad eine oder mehrere betriebliche KPIs erfüllt, die mindestens Sicherheit, Zeit, Entfernung und Logistik umfassen.

## Revendications

1. Système informatique (101, 501) comprenant une mémoire (210, 215) et un ou plusieurs processeurs (205) couplés de manière communicative à la mémoire (210, 215), lesdits un ou plusieurs processeurs (205) étant configurés pour :
identifier (602) un ensemble de données d'entrée (41) pour une opération de véhicule cible ;
déterminer (604), en utilisant un modèle d'optimisation d'apprentissage automatique (130), un trajet optimisé en termes d'impact des émissions (414) sur la base de l'ensemble de données d'entrée (410) et de données antérieures d'impact des émissions (412) associées à une pluralité d'opérations de véhicule antérieures ;
évaluer (606) le trajet optimisé en termes d'impact des émissions (414), sur la base d'un ou plusieurs moteurs de validation (112), afin de générer une sortie d'évaluation, dans lequel lesdits un ou plusieurs moteurs de validation sont configurés pour déterminer si le trajet optimisé en termes d'impact des émissions satisfait un ou plusieurs KPI opérationnels comprenant au moins la sécurité, le temps, la distance et la logistique ; et
déterminer (608) un trajet validé optimisé en termes d'impact des émissions (420) pour l'opération de véhicule cible sur la base du trajet optimisé en termes d'impact des émissions (414) et de la sortie d'évaluation.

2. Système informatique (101, 501) de la revendication 1, dans lequel les données antérieures d'impact des émissions (412) comprennent i) des données opérationnelles antérieures pour chaque opération de véhicule antérieure d'une ou plusieurs opérations de véhicule antérieures et ii) des données antérieures d'impact des émissions saisonnières pour chaque opération de véhicule antérieure desdites une ou plusieurs opérations de véhicule antérieures.

3. Système informatique (101, 501) de la revendication 2, dans lequel les données opérationnelles antérieures pour chaque opération de véhicule antérieure comprennent i) des données antérieures d'utilisation de ressources associées à une ou plusieurs zones d'émissions à forte densité le long du trajet de véhicule antérieur pour l'opération de véhicule antérieure et ii) des données antérieures d'utilisation de ressources associées à une ou plusieurs zones d'émissions à faible densité le long du trajet de véhicule antérieur pour l'opération de véhicule antérieure.

4. Système informatique (101, 501) de la revendication 3, dans lequel les données opérationnelles antérieures pour chaque opération de véhicule antérieure comprennent en outre i) une durée de l'opération de véhicule antérieure dans lesdites une ou plusieurs zones d'émissions à forte densité et ii) une durée de l'opération de véhicule antérieure dans lesdites une ou plusieurs zones d'émissions à faible densité.

5. Système informatique (101, 501) de la revendication 1, dans lequel le modèle d'optimisation d'apprentissage automatique est un modèle d'apprentissage automatique basé sur l'apprentissage par renforcement.

6. Système informatique (101, 501) de la revendication 1, dans lequel lesdits un ou plusieurs processeurs (205) sont configurés pour déterminer le trajet optimisé en termes d'impact des émissions (414) par :
la génération, sur la base de l'ensemble de données d'entrée (410) et des données antérieures d'impact des émissions (412), des données prédites d'impact des émissions pour chaque trajet de véhicule candidat d'un ou plusieurs trajets de véhicule candidats ; et
la sélection du trajet optimisé en termes d'impact des émissions (414) parmi lesdits un ou plusieurs trajets de véhicule candidats sur la base des données prédites d'impact des émissions pour chaque trajet de véhicule candidat.

7. Système informatique (101, 501) de la revendication 1, dans lequel lesdits un ou plusieurs processeurs (205) sont configurés pour évaluer le trajet optimisé en termes d'impact des émissions (414) sur la base desdits un ou plusieurs moteurs de validation (112) en déterminant si le trajet optimisé en termes d'impact des émissions (414) satisfait un ou plusieurs indicateurs clés de performance opérationnels.

8. Système informatique (101, 501) de la revendication 1, dans lequel lesdits un ou plusieurs processeurs (205) sont en outre configurés pour évaluer le trajet optimisé en termes d'impact des émissions (414) afin de générer la sortie d'évaluation sur la base d'un ou plusieurs moteurs liés à l'efficacité (124) en déterminant si le trajet optimisé en termes d'impact des émissions (414) satisfait un ou plusieurs indicateurs clés de performance d'efficacité.

9. Système informatique (101, 501) de la revendication 1, dans lequel lesdits un ou plusieurs processeurs (205) sont en outre configurés pour générer un plan d'opération de véhicule pour l'opération de véhicule cible sur la base du trajet validé optimisé en termes d'impact des émissions (420).

10. Système informatique (101, 501) de la revendication 1, dans lequel l'ensemble de données d'entrée (410) comprend un modèle environnemental, dans lequel lesdits un ou plusieurs processeurs (205) sont configurés pour déterminer le trajet optimisé en termes d'impact des émissions (414) par :
la génération des données d'émissions prédites pour un ou plusieurs trajets de véhicule candidats ; et
l'analyse des données d'émissions prédites (410) avec l'ensemble de données d'entrée et les données antérieures d'impact des émissions (412) afin de déterminer le trajet optimisé en termes d'impact des émissions (414).

11. Procédé mis en œuvre par ordinateur (600) comprenant :
l'identification (602), par un ou plusieurs processeurs (205), d'un ensemble de données d'entrée (410) pour une opération de véhicule cible ;
la détermination (604), par lesdits un ou plusieurs processeurs (205) en utilisant un modèle d'optimisation d'apprentissage automatique (130), d'un trajet optimisé en termes d'impact des émissions (414) sur la base de l'ensemble de données d'entrée (410) et de données antérieures d'impact des émissions (412) associées à une pluralité d'opérations de véhicule antérieures ;
l'évaluation (606), par lesdits un ou plusieurs processeurs (205), du trajet optimisé en termes d'impact des émissions (414) sur la base d'un ou plusieurs moteurs de validation (112) afin de générer une sortie d'évaluation, dans laquelle lesdits un ou plusieurs moteurs de validation sont configurés pour déterminer si le trajet optimisé en termes d'impact des émissions satisfait un ou plusieurs KPI opérationnels comprenant au moins la sécurité, le temps, la distance et la logistique ; et
la détermination (608), par lesdits un ou plusieurs processeurs (205), d'un trajet validé optimisé en termes d'impact des émissions (420) pour l'opération de véhicule cible sur la base du trajet optimisé en termes d'impact des émissions (414) et de la sortie d'évaluation.

12. Procédé mis en œuvre par ordinateur (600) de la revendication 11, dans lequel les données antérieures d'impact des émissions (412) comprennent i) des données opérationnelles antérieures pour chaque opération de véhicule antérieure d'une ou plusieurs opérations de véhicule antérieures et ii) des données antérieures d'impact des émissions saisonnières pour chaque opération de véhicule antérieure desdites une ou plusieurs opérations de véhicule antérieures.

13. Procédé mis en œuvre par ordinateur (600) de la revendication 12, dans lequel les données opérationnelles antérieures pour chaque opération de véhicule antérieure comprennent un ou plusieurs parmi i) des données antérieures d'utilisation de ressources associées à une ou plusieurs zones d'émissions à forte densité le long du trajet de véhicule antérieur pour l'opération de véhicule antérieure, ii) des données antérieures d'utilisation de ressources associées à une ou plusieurs zones d'émissions à faible densité le long du trajet de véhicule antérieur pour l'opération de véhicule antérieure, iii) une durée de l'opération de véhicule antérieure dans lesdites une ou plusieurs zones d'émissions à forte densité, et iv) une durée de l'opération de véhicule antérieure dans lesdites une ou plusieurs zones d'émissions à faible densité.

14. Procédé mis en œuvre par ordinateur (600) de la revendication 11, dans lequel le modèle d'optimisation d'apprentissage automatique (130) est un modèle d'apprentissage automatique basé sur l'apprentissage par renforcement.

15. Procédé mis en œuvre par ordinateur comprenant :
l'identification, par un ou plusieurs processeurs (205), d'un ensemble de données d'entrée (410) pour une opération de véhicule cible ;
la génération, par lesdits un ou plusieurs processeurs (205) et en utilisant un modèle d'optimisation d'apprentissage automatique (130), des données prédites d'impact des émissions pour chaque trajet de véhicule candidat d'un ou plusieurs trajets de véhicule candidats sur la base de l'ensemble de données d'entrée (410) et de données antérieures d'impact des émissions (412) ; et
la sélection, par lesdits un ou plusieurs processeurs (205) et en utilisant le modèle d'optimisation d'apprentissage automatique (130), d'un trajet optimisé en termes d'impact des émissions (414) parmi lesdits un ou plusieurs trajets de véhicule candidats sur la base des données prédites d'impact des émissions pour chaque trajet de véhicule candidat, dans laquelle le trajet optimisé en termes d'impact des émissions sélectionné est évalué en déterminant que le trajet optimisé en termes d'impact des émissions satisfait un ou plusieurs KPI opérationnels comprenant au moins la sécurité, le temps, la distance et la logistique.
